# EUROPÄISCHE PATENTSCHRIFT

(11) **EP 2 561 260 B1**
(45) Veröffentlichungstag und Bekanntmachung des Hinweises auf die Patenterteilung: **03.12.2014**
(21) Anmeldenummer: 11711783.8
(22) Anmeldetag: 29.03.2011
(51) Int. Cl.: F16L 21/04, F16L 21/08

(54) **ROHRVERBINDUNGSVORRICHTUNG**
PIPE CONNECTING DEVICE
DISPOSITIF D'ASSEMBLAGE DE TUYAUX

(30) Priorität: 01.04.2010 AT 5252010
(43) Veröffentlichungstag der Anmeldung: 27.02.2013
(73) Patentinhaber: E. Hawle Armaturenwerke GmbH, 4840 Vöcklabruck (AT)
(72) Erfinder: LEHNER, Franz, A-4800 Pühret (AT); FÜHRER, Gerhard, A-4870 Pfaffing (AT); GRUBER, Karl, A-4852 Weyregg (AT)
(74) Vertreter: Grabherr, Claudia
(86) Internationale Anmeldenummer: PCT/EP2011/001558
(87) Internationale Veröffentlichungsnummer: WO 2011/120669

(56) Entgegenhaltungen:
- EP-A1- 1 906 073
- EP-A2- 2 090 815
- WO-A1-90/07671
- DE-T2- 69 708 480
- GB-A- 2 363 437
- GB-B- 2 377 737

## Beschreibung

Die Erfindung betrifft eine Rohrverbindungsvorrichtung zur auszugssicheren und dichtenden Verbindung eines Einsteckendes mit einer Muffe gemäß dem Oberbegriff von Anspruch 1. Eine derartige Rohrverbindungsvorrichtung ist bekannt aus der EP 2 090 815 A2.

Vorrichtungen zur Verbindung von Rohren, insbesondere zur auszugssicheren und dichtenden Verbindung eines Einsteckendes und einer Muffe sind seit langer Zeit bekannt.

### Gebiet der Erfindung

Die Herstellung einer Verbindung von zwei Rohren, insbesondere einer Muffe mit einem Einsteckende ist ein Vorgang, der bei Rohrleitungssystemen auf viele unterschiedliche Weisen erfolgen kann. In der Praxis gibt es zwei Hauptkriterien, die die Güte einer derartigen Verbindung beschreiben.

Das erste Kriterium ist die Auszugssicherung. Bei druckbeaufschlagten Rohren, aber auch bei längeren Rohrleitungssystemen, welche aus einer Vielzahl von Rohren bestehen, ist es vonnöten, eine Trennung der Verbindung durch Zugkräfte bzw. Druckkräfte zu verhindern. So können in Rohrleitungssystemen durch Wärme bzw. Kältespannungen, durch Setzungen des Erdreichs aber auch durch ein druckbeaufschlagtes Medium in dem Rohrsystem Auszugskräfte von mehreren tausend Newton auftreten. Aus diesem Grund ist es notwendig eine Auszugssicherung vorzusehen. Diese wird meist über Keilflächen bewirkt, wodurch ein Ring bei einer Auszugsbewegung selbsthemmend gegen das Einsteckende gedrückt wird. Ein Problem, das sich bei herkömmlichen Auszugssicherungen stellt ist, dass die Klemmringe nur in sehr begrenztem Maße an den Außenumfang des Einsteckendes anpassbar sind. In der Praxis kommt es jedoch vor, dass beispielsweise bei einem Rohrbruch zwar die Innendimension des Rohres bekannt ist, die Außendimension aber vom verwendeten Werkstoff des Rohres abhängt und somit nicht bekannt ist. Besonders bei alten Rohrleitungen kann es somit vorkommen, dass erst beim Öffnen eines Reparaturschachtes ersichtlich wird, ob das Rohr aus Kunststoff, Stahl oder dergleichen besteht. Je nach Werkstoff variiert die Rohrdicke und somit der Außendurchmesser dieser Rohre. Für ein Reparaturteam war es bisher also notwendig verschiedene Muffen für die verschiedenen Außendurchmesser mitzuführen. Um diesen Mehraufwand zu eliminieren gibt es seit längerer Zeit Bestrebungen eine Muffenverbindung zu schaffen, die sich flexibel an verschiedenste Außendurchmesser derartiger Rohre anpassen kann.

Das zweite Kriterium ist die Dichtheit der Verbindung. Auch beim Widerstand gegen den Austritt des Rohrmediums, z.B. Gas oder Wasser ist zu beachten, dass sehr hohe Drücke in den Rohrleitungen herrschen können. Bei der Dichtwirkung ist weiters zu beachten, dass die Rohre und Muffen gewisse Oberflächenunebenheiten aufweisen können, dass die Klemmkräfte sehr stark variieren können, dass es zu Ovalverformungen kommen kann und dass in manchen Fällen die Rohre nicht fluchtend aneinander gereiht sind. All diese Einflüsse sollten die Dichtwirkung einer derartigen Verbindung nicht beeinträchtigen. Ferner ist auch eine Dichtung gegen die Verschmutzung durch das umliegende Medium oder auch durch das im Rohr geführte Medium zu vermeiden, da die Beweglichkeit der Kupplungselemente und somit die Auszugssicherung und die Dichtheit beeinträchtigt werden kann.

Die WO 90/07671 beispielsweise offenbart eine auszugssichere dichtende Verbindung für ein Einsteckende mit einer Muffe. Dabei ist ein Klemmring vorgesehen der aus einer Vielzahl zu einander verschieblicher Klemmelemente besteht, sowie ein Dichtungsring, der die Muffe gegenüber dem Rohr abdichtet. Die Verklemmung des Klemmrings gegen das Einsteckende wird mit Hilfe zweier Keilflächen bewirkt, welche durch Festziehen von Befestigungsschrauben derart zu einander geführt werden, dass der Klemmring radial nach innen gedrückt wird. Nachteilig an dieser Vorrichtung ist, dass durch diese Ausführungsform nur ein sehr geringes Maß an Anpassung an verschiedene Rohrdurchmesser möglich ist. Des weiteren ist die Dichtung nicht unter das Klemmelement gezogen, was sich in der Praxis als negativ herausgestellt hat. Auch der Dichtring wird nur über Umwege von keilförmigen Ringen gegen das Einsteckende gedrückt und ist somit gefährdet bei hohen Rohrdrücken nachzugeben. Eine Weiterentwicklung einer derartigen Rohrverbindung zeigt die DE 69708480 T2. Diese offenbart eine Rohrverbindung für ein Rohr und ein Einsteckende mit einem Dichtungsorgan und einem Klemmring, wobei der Klemmring aus gleitend nebeneinander liegenden Elementen bestehen, welche sich um eine Achse parallel zur Rohrachse drehen können und somit irisartig den Innendurchmesser verkleinern. Die Dichtwirkung wird durch einen Dichtreifen bewirkt, der sich von der Rohrseite des Klemmrings um den Klemmring herum zur Muffenseite erstreckt. Nachteilig an dieser Konstruktion ist, dass zur Anpassung der Klemmvorrichtung an den Rohraußendurchmesser des Einsteckendes die Verschieblichkeit der Glieder zueinander zu jedem Zeitpunkt möglich sein muß. Dabei ist nachteilig, dass bei einer festen Verbindung von zwei oder mehreren Gliedern durch Verschmutzung der komplette Ring starr wird und somit in seiner Wirkung stark eingeschränkt ist.

Ein weiterer Nachteil der, dem Stand der Technik entsprechenden Mehrbereichskupplungen ist, dass die Verbindung und Spannung des Verbundes Spannring - Klemmring - Muffenring ausschließlich über Schrauben geschieht. Bei vier bis acht, am Umfang verteilten Schrauben ist dies ein zeitaufwändiger Vorgang, da zur Vermeidung von Verkantungen, die Schrauben nur stückweise angezogen werden können.

Aufgabe der vorliegenden Erfindung ist es, eine Verbindung eines Einsteckendes mit einer Muffe vorzusehen, die auszugssicher, ausreichend dicht und in ihrem Einsatzbereich variabel ist, und darüber hinaus unempfindlich gegen Verschmutzung, hohe Auszugskräfte, hohe Mediumsdrücke ist, die ferner einfach in der Anwendung, schnell einsetzbar und schnell montierbar ist sowie eine lange Lebensdauer aufweist.

Die erfindungsgemäße Aufgabe wird durch die Merkmale des Anspruchs 1 gelöst.

Ferner ist die Rohrverbindungsvorrichtung dadurch gekennzeichnet, dass zur Verbindung der Glieder Zapfen und Ausnehmungen vorgesehen sind, dass die Zapfen des einen Gliedes in die Ausnehmungen des darauffolgenden Gliedes einführbar sind, dass die Zapfen in etwa parallel zur Mittelachse verlaufend angeordnet sind und dass die Ausnehmungen an der Innenseite der Seitenwangen des Aufnahmeabschnitts vorgesehen sind.

Gemäß der Erfindung ist vorgesehen, dass die Zapfen und die Ausnehmungen derart ausgebildet sind, dass eine Verschiebung der Glieder zueinander und eine Drehung der Glieder um die Zapfen ermöglicht ist, wobei eine Verschiebung des einen Gliedes relativ zum darauffolgenden Glied in radialer Richtung gehemmt ist, dass die Ausnehmungen langlochförmig ausgebildet sind. Weiter Vorteilhafte Merkmale sind, dass die Seitenwangen des einen Gliedes das darauffolgende Glied seitlich über dessen gesamte Höhe umgreifen und dass die Seitenwangen Schürzenelemente aufweisen die ein darauffolgendes Glied zumindest teilweise seitlich überlappen.

Weiters zeichnet sich die erfindungsgemäße Rohrverbindungsvorrichtung dadurch aus, dass die Schürzenelemente die Seitenwangen des darauffolgenden Gliedes zumindest teilweise überlappen, dass ein Dichtring vorgesehen ist, der den Klemmring zumindest an der Rohrseite und an der Muffenseite an dessen vollem Umfang berührt, dass eine Verschmutzungsdichtlippe vorgesehen ist, welche den Spalt zwischen dem Spannring und dem Muffenring und/oder die nach außen weisende Fläche des Klemmrings überdeckt und dass diese in bevorzugter Weise am Dichtring vorgesehen ist.

Vorteilhaft ist vorgesehen, dass am Klemmring eine Dichtungsnut zur Aufnahme des Haltefortsatzes des Dichtrings vorgesehen ist, die in bevorzugter Weise an der Rohrseite des Klemmrings ringförmig um dessen gesamten Umfang in den einzelnen Gliedern ausgespart ist, dass an der Rohrseite des Klemmrings Gripelemente vorgesehen sind, dass die Gripelemente zumindest an ihrer dem Rohr zugewandten Seite Gripzacken aufweisen und dass die Gripzacken bevorzugt eine härtere Oberfläche aufweisen als das geklemmte Einsteckende.

Desweiteren ist die Rohrverbindungsvorrichtung dadurch gekennzeichnet, dass der Spannring mit dem Spannelement gegen den Muffenring spannbar ist, wobei die Spannkraft zumindest teilweise über die Spannkegelfläche, die Muffenkegelfläche und den Klemmring Richtung Einsteckende gerichtet ist, dass der Spannring mit dem Schraubenelement gegen den Muffenring spannbar ist, wobei die Spannkraft zumindest teilweise über die Spannkegelfläche, die Muffenkegelfläche und den Klemmring Richtung Einsteckende gerichtet ist und dass die Auszugskraft über die Spannkegelfläche und den Winkel α der, der Spannkegelfläche zugewandten Abschnitte des Klemmrings Richtung Einsteckende gerichtet ist.

Weitere vorteilhafte Merkmale ergeben sich aus der Beschreibung, den Ansprüchen sowie den Zeichnungen.

Im Folgenden wird die Erfindung anhand von Ausführungsbeispielen weiter beschrieben.
Fig. 1 zeigt einen Schnitt durch eine erfindungsgemäße Rohrverbindung.
Fig. 2 zeigt den Schnitt eines Details der erfindungsgemäßen Rohrverbindung.
Fig. 3 zeigt einen Schnitt der Klemmverbindung der erfindungsgemäßen Vorrichtung.
Fig. 4 zeigt eine Schrägansicht eines erfindungsgemäßen Gliedes von der Seite des Aufnahmeabschnitts.
Fig. 5 zeigt eine Schrägansicht eines Gliedes von der Seite des Steckabschnitts.
Fig. 6 zeigt eine Seitenansicht eines Segmentes des Klemmringes in zusammengeschobener Stellung (6b) und in ausgezogener Stellung (6a)

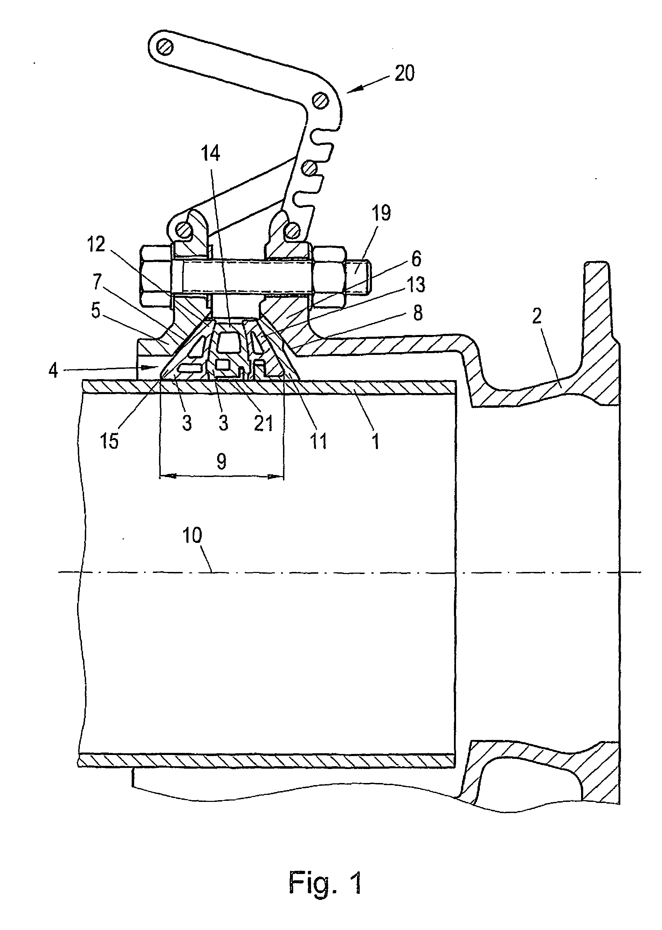

Fig. 1 zeigt den Schnitt mit einem Einsteckende 1, einer Muffe 2, einem Klemmring 4 bestehend aus Gliedern 3, einem Dichtring 11, einem Muffenring 6 und einem Spannring 5, einem Schraubenelement 19 sowie einem Spannelement 20. Das Einsteckende ist durch den Spannring 5 in die Muffe 2 eingeführt. Die Muffe weist einen Muffenring 6 mit einer Muffenkegelfläche 8 auf. Diese Kegelfläche ist in Richtung Mittelachse 10 geneigt. Dabei ist anzumerken, dass der Begriff Kegelfläche nicht auf eine exakte kegelförmige Fläche bezogen ist, sondern auf eine kegelige Ausformung. Diese Fläche ist demnach im Schnitt nicht unbedingt gerade, sondern kann auch gewölbt bzw. gekrümmt sein. An der Muffenkegelfläche liegt der Dichtring 11 an, welcher sich bis unter den Klemmring, also zur Rohrseite des Klemmrings erstreckt. Auf der anderen Seite des Klemmringes ist der Spannring vorgesehen, welcher über ein Spannelement 20 und ein Schraubenelement 19 in Richtung Muffenring gezogen werden kann. Auch dieser weist eine Kegelfläche, im Speziellen die Spannkegelfläche 7 auf. Auch diese ist Richtung Mittelachse 10 geneigt und ist wie weiter oben erwähnt nicht zwingend exakt kegelförmig. Der Klemmring besteht aus einer Vielzahl ineinander gesteckter Glieder 3, wobei in diesem Schnitt zwei Glieder zu sehen sind. Die Glieder weisen jeweils einen Steckabschnitt 14 und einen Aufnahmeabschnitt 15 auf. In dieser Figur ist demnach der Steckabschnitt des einen Gliedes und der Aufnahmeabschnitt eines darauf folgenden Gliedes zu sehen. Am Steckabschnitt ist ferner an der Rohrseite 12 ein Gripelement 21 vorgesehen. Dieses Gripelement ist in dieser Ausführungsform L-förmig ausgebildet und weist an der Rohrseite Zacken auf. Als

Werkstoff eines Gripelements bieten sich jene Werkstoffe an, die härter sind, als das Material des Einsteckendes um zu gewährleisten, dass sich die Zacken in die Oberfläche des Einsteckendes verkrallen können. Die Gripelemente sind in dieser Ausführungsform nicht als durchgehender Ring ausgeführt, sondern einzeln in jedem Glied vorgesehen. Es ist aber durchaus vorstellbar, dass sich die Gripelemente über mehrere Glieder des Klemmrings erstrecken, als flexibler oder geschlitzter Ring ausgeführt sind oder, dass die Gripelemente aus dem gleichen Material wie die Glieder bestehen und/oder dass die Glieder an der Rohrseite selbst Zacken aufweisen, die als Gripelemente wirken. Bei Verwendung eines geschlitzten, oder C-förmigen Ringes beispielsweise, könnte der Ring durch Federwirkung die einzelnen Glieder in etwa radial nach außen drücken, und somit den Durchmesser des Ringes beim Einführen des Einsteckendes maximieren.

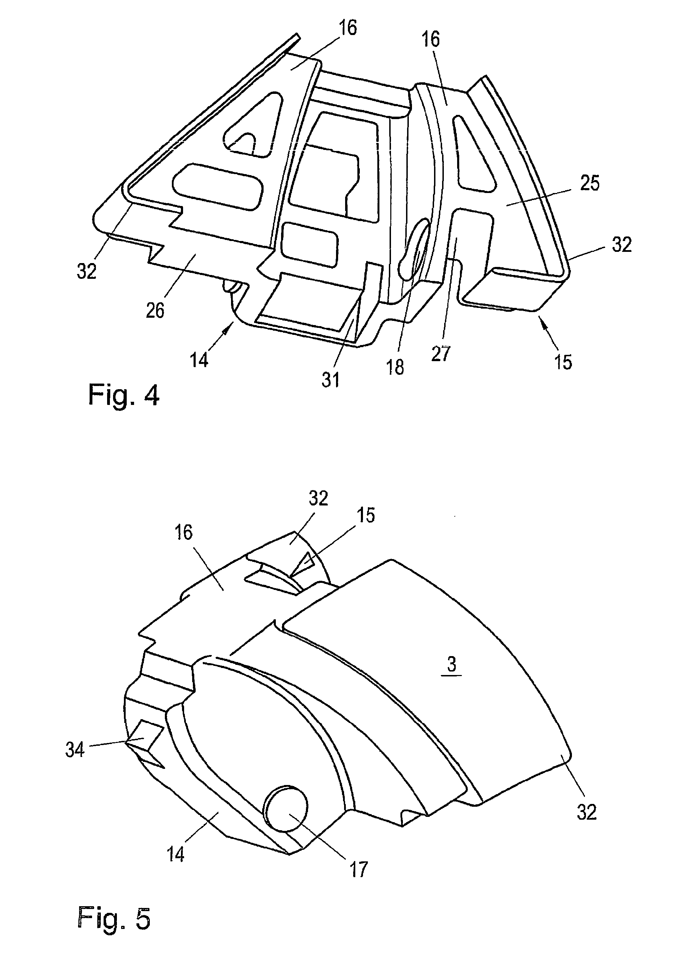

Die Herstellung einer Rohrverbindung beinhaltet folgende Schritte:
Das Einsteckende wird durch den Spannring 5, den Klemmring 4 in die Muffe eingeführt. Dabei ist der Innendurchmesser des Klemmringes so groß, dass die Einführung von Rohren verschiedener Durchmesser leicht möglich ist. Ist das Einsteckende eingeführt, so wird über das Spannelement 20 der Spannring 5 Richtung Muffenring 6 gezogen. Durch diese Schnellspannung werden auch die beiden Kegelflächen 7 und 8 zueinander bewegt und drücken somit den Klemmring, dessen Breite 9 mit steigendem Abstand von der Mittelachse 10 abnimmt, Richtung Rohr. Durch diese Schnellspannung wird eine erste Verbindung der Dichtung sowie der Gripelemente mit der Außenseite des Einsteckendes 1 hergestellt sowie eine Berührung des Dichtrings 11 an der Muffenkegelfläche bewirkt. Zur Herstellung einer stabileren und dichteren Verbindung werden nun die Schraubenelemente 19 verwendet um die beiden Ringe, Muffenring 6 und Spannring 5 weiter zueinander zu ziehen. Dabei wird einerseits der Klemmring noch stärker Richtung Einsteckende gedrückt und andererseits wird der Druck auf den Dichtring 11 zwischen Klemmring 4 und der Muffenkegelfläche 8 größer. Wird nun der Klemmring weiter Richtung Einsteckende bewegt, so ist es notwendig, dass dieser Klemmring in seinem Umfang variabel ist. Diese Variabilität wird dadurch gegeben, dass die einzelnen Glieder zueinander verschieblich angeordnet sind. Dies wird in den Figuren 4 und 5 weiter ausgeführt.

Ein weiterer Vorteil des erfindungsgemäßen Spannelements ist, dass durch ein derartiges Schnellspannsystem die Herstellung der Verbindung erheblich erleichtert wird. Üblicher Weise sind am Umfang einer derartigen Rohrverbindung mindestens drei, meist aber vier bis acht Schrauben am Spann.- und Muffenring vorgesehen. Durch die Vorspannung durch das Spannelement müssen die Schraubverbindungen nur mehr festgezogen werden und werden in vorteilhafter Weise nicht dazu verwendet, die beiden Ringe über weitere Strecken zueinander zu ziehen. Das Spannelement ist in dieser Ausführungsform als mehrstufiges Kniehebel- Schnellspannsystem ausgeführt. Es sind aber alle Schnellspannvorrichtungen vorstellbar, die ein rasches Spannen der beiden Ringe (5, 6) gegeneinander ermöglichen. Derartige Vorrichtungen können z.B. Schnallen, Ratschen, Gurte, Seilzüge, Clips oder ähnliches sein. Es wird weiters angemerkt, dass diese Schnellspannvorrichtungen die Schraubverbindung auch ersetzen können.

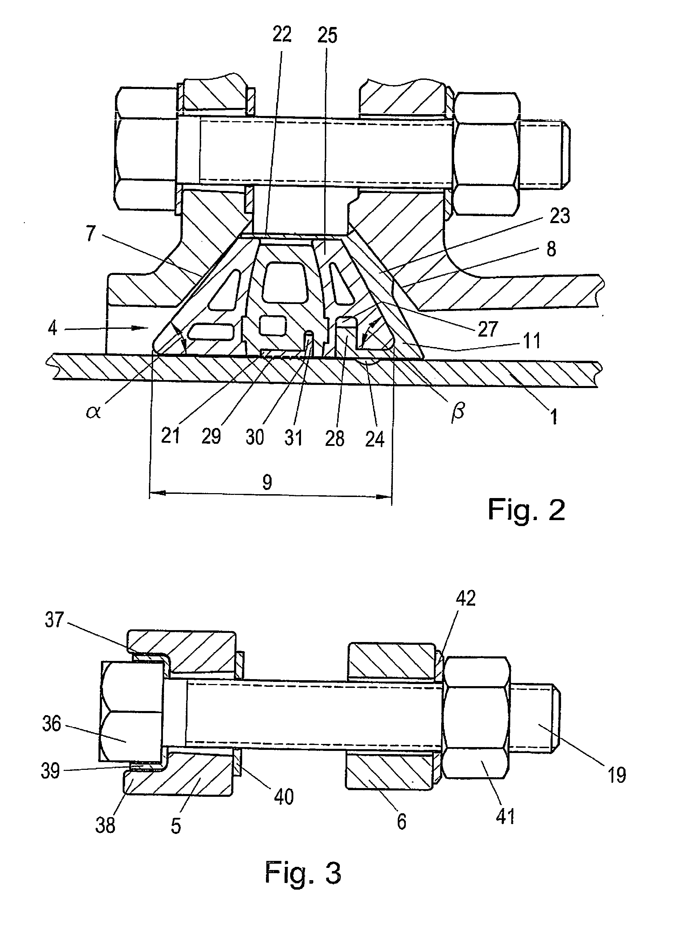

Fig. 2 zeigt eine detaillierte Darstellung einer weiteren Ausführungsform des erfindungsgemäßen Klemmrings 4, welcher an das Einsteckende 1 eines Rohres gedrückt ist, wobei die Kräfte in Rohrrichtung durch die Kegelflächen: Spannkegelfläche 7 und Muffenkegelfläche 8 erzeugt werden. Der Klemmring weist eine Breite 9 auf, die mit steigendem Abstand von der Rohrmittelachse 10 abnimmt. In dieser Ausführungsform sind die schrägen Seitenwände der Seitenwangen 16 kegelförmig und dadurch in diesem Schnitt als Geraden dargestellt. Die Winkel der Seitenwände zum Einsteckende des Rohres können auf der Muffenseite und auf der Spannringseite verschieden, aber auch gleich sein. In dieser Ausführungsform ist der Winkel α der Spannringseite kleiner als der Winkel β der Muffenseite. Dies hat den Effekt, dass die Auszugskräfte und somit die Kräfte vom Spannring und der Spannkegelfläche auf die Seitenwangen 16 des Klemmrings in radiale Kräfte, also Kräfte Richtung Rohrmittelachse umgewandelt werden. Auf der Muffenseite des Klemmrings ist der Winkel β größer, um die Dehnung und Scherung der Dichtung zu verkleinern. In der Muffenwange 25 ist eine Dichtungsnut 27 vorgesehen, in welche der Haltefortsatz 28 des Dichtrings 11 eingesteckt werden kann. Der Dichtring weist ferner einen oder mehrere Rohrwulste auf, welche ähnlich O-Ringen, die Dichtwirkung verbessern. Auch an der Muffenseite ist ein Muffenwulst 23 zur Verbesserung der Dichtwirkung vorgesehen.

Die Spannkegelfläche und der Klemmring berühren einander in dieser Ausführungsform entlang einer Kreislinie. Diese Linienberührung ist durch die unterschiedlichen Kegelwinkel gegeben. Auch bei gekrümmten, kegeligen Flächen kommt es zu einer Linienberührung. Je nach Belastung und Anforderung kann es sich aber auch anbieten, eine Flächenberührung der beiden Flächen vorzusehen. Auch die Muffenkegelfläche und der Klemmring, insbesondere der Dichtring und die Muffenkegelfläche weisen in dieser Ausführung keine Flächenberührung auf. Erst bei Quetschung der elastischen Dichtung kommt es zu einer Flächenberührung. Auch an dieser Stelle ist es je nach Anforderung durchaus denkbar eine grundsätzliche Flächenberührung vorzusehen.

An der nach außen gerichteten Seite des Klemmrings 4 ist eine Verschmutzungsdichtlippe 22 vorgesehen. Diese überdeckt den nach außen weisenden Abschnitt um ein Eindringen von Sand, Erdreich oder ähnlichen verschmutzenden Gegenständen in den Klemmring bzw. in die Spalten des Klemmrings zwischen den einzelnen Gliedern zu verhindern. Die Dichtlippe überdeckt in dieser Ausführungsvariante die Außenseite des Klemmrings kann aber selbstverständlich auch über die Spannringseite weiter gezogen sein.

An der Rohrseite des Klemmrings, im Speziellen an der Rohrseite der Steckabschnitte der Glieder sind Gripelemente 21 vorgesehen. Diese sind mit dieser Ausführungsform L-förmig ausgebildet und weisen an ihrer Rohrseite Gripzacken 29 auf. Die Befestigung am Klemmring erfolgt in dieser Ausführungsform durch Klemmung eines Haltefortsatzes 30 in einer Haltenut 31 des Gliedes.

Fig. 3 zeigt einen Schnitt durch die Schraubverbindung welche den Spannring 5 mit dem Muffenring 6 verbindet und / oder diese Teile zueinander ziehbar macht. Es sei hier angemerkt, dass in dieser Ausführungsform eine Schraubverbindung vorgesehen ist. Es ist aber selbstverständlich auch denkbar, andere Verbindungstypen wie beispielsweise Ratschen, Schellen, Nieten, elastische Züge, Spanner, Schnallen und dergleichen zu verwenden. Das Verbindungselement, hier das Schraubenelement 19 dient der Bewegung bzw. Spannung des Spannrings 5 gegen den Muffenring 6. Da die Betätigung dieses Schraubenelements in der Praxis in schwer zugänglichen Bereichen passiert, ist es vonnöten diese Verbindung so bedienfreundlich wie möglich zu gestalten. In dieser Ausführungsvariante ist demnach der Schraubenkopf 36 als Sechskant ausgeführt und liegt in einer Schraubenkopföffnung 37, welche Seitenwangen 38 der Schraubenkopföffnung aufweist. Diese Öffnung ist derart ausgestaltet, dass das Einstecken der Schraube und des Schraubenkopfs zwar möglich ist, eine Drehbewegung der eingesteckten Schraube, im Speziellen des eingesteckten Schraubenkopfs aber behindert ist. Ferner ist zum Schutz der, bei Rohrelementen meist vorgesehenen Antikorrosionsbeschichtung, ein Schutzelement 39 vorgesehen, welches die Kerbwirkung des Schraubenkopfs in der Schraubenkopföffnung 37 derart abmindern soll, dass die besagte Schutzschicht nicht verletzt wird, auch wenn das Anzugsmoment der Schraube sehr groß ist. Auf der gegenüberliegenden Seite des Schraubenkopfs, am Spannring, ist ein Halteelement 40 vorgesehen, welches auf den Schraubenschaft geklemmt ist und somit ein Herausfallen der Schraube aus der Öffnung des Spannrings verhindert.

Am gegenüberliegenden Ende der Schraube ist eine Mutter 41 vorgesehen, welche über eine Beilagscheibe 42 die Längsspannung der angezogenen Schraube auf den Muffenring weitergibt. Anzumerken ist, dass als Schraubverbindung Dehnschrauben, aber auch herkömmliche Schrauben verwendet werden können, wobei eine Aufrechterhaltung der Spannung durch Elastizität der Anformungen am Muffenring und am Spannring gegeben sein kann. Ferner ist anzumerken, dass die Beilagscheibe auch durch Elemente wie Spannringe, Schnorrscheiben, Keilscheiben, Federringe und dergleichen ersetzt werden kann.

Fig. 4 zeigt eine Ansicht eines Gliedes 3 von der Seite des Aufnahmeabschnittes 15 mit zwei Seitenwangen 16 - einer Muffenwange 25 und einer Spannringwange 26, einem Steckabschnitt 14 und einem Aufnahmeabschnitt 15, wobei an den Seitenwangen, in dieser Ausführungsform an der Muffenwange 25 eine Dichtungsnut 27, und am Steckabschnitt eine Haltenut 31 für ein Gripelement vorgesehen. Im Bereich des Aufnahmeabschnittes, im Speziellen zwischen den beiden Seitenwangen 16 sind Ausnehmungen 18 vorgesehen. Diese Ausnehmungen sind langlochförmig oder langlochförmig-gekrümmt ausgeführt. Sie dienen, wie weiters in Fig. 5 beschrieben wird der Aufnahme der Zapfen 17.

In den äußeren Bereichen der Seitenwangen 16 sind Schürzenelemente 32 vorgesehen. Diese übergreifen bei zusammengesteckten Gliedern die Seitenwangen des darauf folgenden Gliedes zumindest teilweise. Die Schürzen dienen einerseits der Abdichtung gegen Verschmutzung von außen und andererseits, durch ihre gebogene Form der Zentrierung und Führung der Glieder zueinander. Ferner bilden sie, wie auch Teile des Steckabschnittes und des Aufnahmeabschnittes als Anschlag.

Fig. 5 zeigt dasselbe Glied wie Fig. 4 allerdings von der Steckabschnittsseite aus betrachtet. Es weist einen Steckabschnitt 14, einen Aufnahmeabschnitt 15, Seitenwangen 16 mit Schürzenelementen 32 auf. Am Steckabschnitt 14 sind beidseitig Zapfen 17 vorgesehen. Diese Zapfen erstrecken sich in seitlicher Richtung von dem Steckabschnitt weg und greifen bei zusammengesteckten Elementen in die ebenfalls beidseitig vorgesehenen langlochförmigen Ausnehmungen 18 der Aufnahmeabschnitte 15 der darauf folgenden Glieder ein.

Ferner ist an der Stirnseite 33 des Steckabschnittes 14 ein Federelement 34 vorgesehen. Dieses Federelement dient der federnden Abstandshaltung zum darauf folgenden Glied.

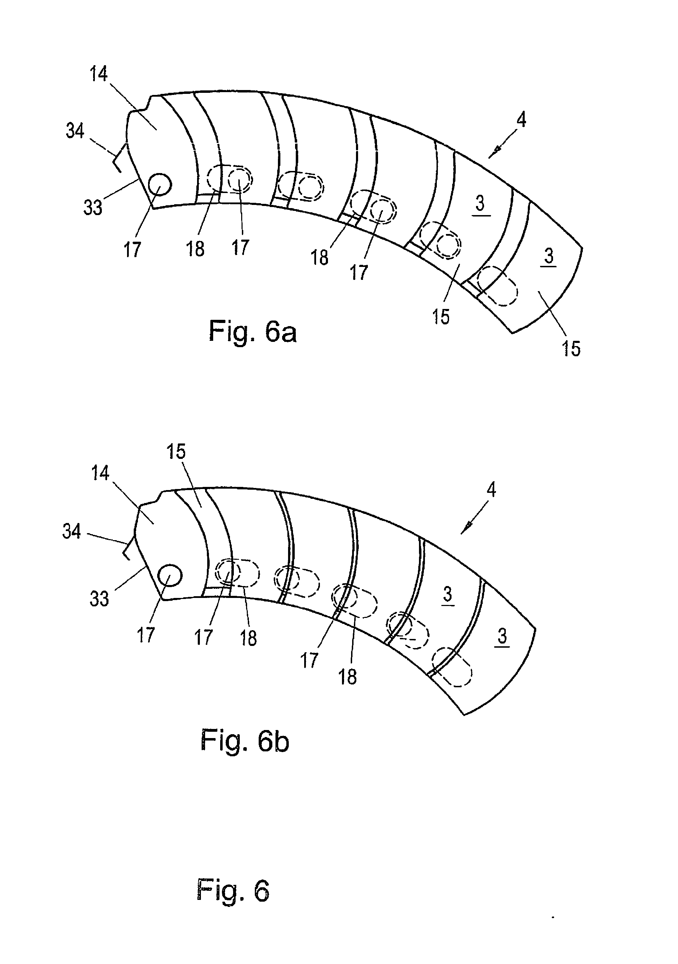

Fig. 6 zeigt eine seitliche Ansicht einer Reihe ineinander gesteckter Glieder 3, die ein Segment des Klemmrings 4 bilden. Fig. 6a zeigt diesen Abschnitt in weitest möglich ausgezogener Stellung und Fig. 6b zeigt dieselbe Anordnung in weitest möglich zusammen geschobener Stellung. Wie auch in den vorangegangenen Figuren beschrieben, weisen die Glieder jeweils einen Steckabschnitt 14 und einen Aufnahmeabschnitt 15 auf. Im Steckabschnitt sind Zapfen 17 vorgesehen, welche in die Ausnehmungen 18 der Steckabschnitte eingreifen können. Diese Ausnehmungen 18 weisen eine Form auf, sodass die Zapfen eine gewisse Beweglichkeit, im Speziellen eine Führung in diesen haben. So sind diese Ausnehmungen in der dargestellten Ausführungsform langlochförmig ausgebildet, wobei die Längsseiten gekrümmt sind. Anzumerken ist auch, dass sie mitgegossen, gefräst oder durch sonstige fertigungstechnische Schritt gefertigt sein können. Durch die spezielle Ausformung und das Zusammenwirken der Zapfen 17 mit den Ausnehmungen 18 werden bestimmte Relativbewegungen der Glieder zueinander zugelassen, andere behindert. So ist in dieser Ausgestaltung eine Bewegung der Glieder zueinander über eine Strecke, die der Langlochlänge minus dem Zapfendurchmesser entspricht, möglich. Ferner ist in begrenztem Maße eine Rotation der Glieder um die Zapfen 17 möglich. Dies wird weiters vergünstigt durch die kurvenförmige Ausgestaltung der Abschlusskanten der Seitenwangen 16 und / oder der Schürzenelemente 32. An den Stirnseiten der Steckabschnitte 33 sind Federelemente 34 vorgesehen, welche die Glieder in unbelastetem Zustand voneinander, im Rahmen der durch die Kinematik zugelassenen Strecke voneinander entfernen. In unbelastetem Zustand befindet sich der Klemmring in seinem maximal ausgezogenen Zustand, also in einer Position in der der Klemmring 4 einen maximalen Innendurchmesser aufweist. Angemerkt sei, dass derartige Federelemente zur Beabstandung der Glieder vorgesehen sein können, aber nicht zwingend vorgesehen sein müssen. Auch durch die kegelige Ausgestaltung des Spannrings und / oder des Muffenrings ist eine gleichmäßige Verteilung der Glieder gegeben. In ausgezogener Stellung übergreift jedes Schürzenelement 32 der Seitenwange 16 das darauf folgende Glied, im Speziellen den Steckabschnitt und zumindest einen Teil des Aufnahmeabschnitts. Die Steckverbindung, nämlich der Steckabschnitt mit den daran vorgesehenen Zapfen 17 und den Ausnehmungen 18 des Aufnahmeabschnitts ist demnach in jeder Auszugsstellung geschützt und dadurch nicht von außen zugänglich. Dies hat den Vorteil, dass Verschmutzungen wie beispielsweise Erdreich, Sand, Kies, etc. keine Möglichkeit hat in diesen Bereich vorzudringen und die Beweglichkeit des Klemmrings 4 damit zu beeinträchtigen.

## Patentansprüche

1. Rohrverbindungsvorrichtung zur auszugssicheren und dichtenden Verbindung eines Einsteckendes (1) mit einer Muffe (2), mit einem, aus mehreren in Umfangsrichtung zueinander beweglich angeordneten Gliedern (3) zusammengesetzten Klemmring (4), der einen variablen Umfang aufweist und mit einem Spannring (5) gegen einen Muffenring (6) spannbar ist,
wobei der Spannring (5) eine Spannkegelfläche (7) und der Muffenring (6) eine Muffenkegelfläche (8) aufweist,
wobei die beiden Kegelflächen (7,8) Richtung Klemmring und Mittelachse (10) weisen,
wobei die Breite (9) des Klemmringes (4) mit wachsendem Abstand von der Mittelachse (10) abnimmt,
wobei die Glieder (3) jeweils einen Steckabschnitt (14) und einen Aufnahmeabschnitt (15) aufweisen,
wobei der Aufnahmeabschnitt (15) Seitenwangen (16) aufweist, die den Steckabschnitt (14) des darauffolgenden Gliedes seitlich im Bereich der Spannkegelfläche (7) und der Muffenkegelfläche (8) zumindest teilweise umgreifen,
wobei im Bereich des Aufnahmeabschnittes (15), zwischen den beiden Seitenwangen (16), Ausnehmungen(18) zur Aufnahme von Zapfen (17) vorgesehen sind,
wobei zur Verbindung der Glieder Zapfen (17) und besagte Ausnehmungen (18) vorgesehen sind
und wobei die Zapfen des einen Gliedes in die Ausnehmungen des darauffolgenden Gliedes einführbar sind
**dadurch gekennzeichnet, dass**
die Ausnehmungen langlochförmig oder gekrümmt langlochförmig ausgeführt sind,
dass die Zapfen (17) in etwa parallel zur Mittelachse (10) verlaufend angeordnet sind
und dass die Zapfen (17) und die Ausnehmungen (18) derart ausgebildet sind, dass eine Verschiebung der Glieder zueinander und eine Drehung der Glieder um die Zapfen ermöglicht ist, wobei eine Verschiebung des einen Gliedes relativ zum darauffolgenden Glied in radialer Richtung gehemmt ist.

2. Rohrverbindungsvorrichtung nach Anspruch 1, **dadurch gekennzeichnet, dass** die Zapfen (17) am Steckabschnitt (14) vorgesehen sind, und dass die Ausnehmungen (18) an der Innenseite der Seitenwangen (16) des Aufnahmeabschnitts (15) vorgesehen sind.

3. Rohrverbindungsvorrichtung nach einem der Ansprüche 1 oder 2, **dadurch gekennzeichnet, dass** die Seitenwangen (16) Schürzenelemente (32) aufweisen, die ein darauffolgendes Glied (3) oder die Seitenwangen (16) des darauffolgenden Gliedes(3) zumindest teilweise seitlich überlappen.

4. Rohrverbindungsvorrichtung nach einem der Ansprüche 1 bis 3 **dadurch gekennzeichnet, dass** ein Dichtring (11) vorgesehen ist, der den Klemmring (4) zumindest an der Rohrseite (12) und an der Muffenseite (13) an dessen vollem Umfang berührt.

5. Rohrverbindungsvorrichtung nach Anspruch 4, **dadurch gekennzeichnet, dass** eine Verschmutzungsdichtlippe (22) vorgesehen ist, welche den Spalt zwischen dem Spannring (5) und dem Muffenring (6) und/oder die nach außen weisende Fläche des Klemmrings (4) überdeckt und dass diese in bevorzugter Weise am Dichtring (11) vorgesehen ist.

6. Rohrverbindungsvorrichtung nach einem der Ansprüche 4 oder 5, **dadurch gekennzeichnet, dass** am Klemmring (4) eine Dichtungsnut (27) zur Aufnahme des Haltefortsatzes (28) des Dichtrings (11) vorgesehen ist, die in bevorzugter Weise an der Rohrseite (12) des Klemmrings (4) ringförmig um dessen gesamten Umfang In den einzelnen Gliedern ausgespart ist.

7. Rohrverbindungsvorrichtung nach einem der Ansprüche 1 bis 6, **dadurch gekennzeichnet, dass** an der Rohrseite (12) des Klemmrings (4) Gripelemente (21) vorgesehen sind, die zumindest an ihrer dem Rohr zugewandten Seite Gripzacken (29) aufweisen und dass die Gripzacken bevorzugt eine härtere Oberfläche aufweisen, als das geklemmte Einsteckende (1).

8. Rohrverbindungsvorrichtung nach einem der Ansprüche 1 bis 7, **dadurch gekennzeichnet, dass** der Spannring mit dem Spannelement (20) gegen den Muffenring (6) spannbar ist, wobei die Spannkraft zumindest teilweise über die Spannkegelfläche (7), die Muffenkegelfläche (8) und den Klemmring (4) Richtung Einsteckende (1) gerichtet ist.

9. Rohrverbindungsvorrichtung nach einem der Ansprüche 1 bis 8, **dadurch gekennzeichnet, dass** der Spannring mit einem Schraubenelement (19) gegen den Muffenring (6) spannbar ist, wobei die Spannkraft zumindest teilweise über die Spannkegelfläche (7), die Muffenkegelfläche (8) und den Klemmring (4) Richtung Einsteckende (1) gerichtet ist.

10. Rohrverbindungsvorrichtung nach einem der Ansprüche 1 bis 9, **dadurch gekennzeichnet, dass** die Auszugskraft über die Spannkegelfläche (7) und den Winkel α der, der Spannkegelfläche zugewandten Abschnitte des Klemmrings (4) Richtung Einsteckende (1) gerichtet ist.

11. Rohrverbindungsvorrichtung nach einem der Ansprüche 1 bis 10, **dadurch gekennzeichnet, dass** an den Stirnseiten der Steckabschnitte (33) Federelemente (34) vorgesehen sind, welche die Glieder in unbelastetem Zustand im Rahmen der durch die Kinematik zugelassenen Strecke voneinander entfernen.

## Claims

1. A pipe connecting device for connecting an insertion end (1) to a coupling (2) in an extraction-proof and sealed fashion, with a clamping ring (4) that is composed of several elements (3) arranged such that they can be moved relative to one another in the circumferential direction, wherein said clamping ring has a variable circumference and can be tensioned against a coupling ring (6) by means of a tension ring (5),
wherein the tension ring (5) features a conical tensioning surface (7) and the coupling ring (6) features a conical coupling surface (8),
wherein the two conical surfaces (7, 8) point in the direction of the clamping ring and the central axis (10),
wherein the width (9) of the clamping ring (4) decreases as the distance from the central axis (10) increases,
wherein the elements (3) respectively feature a plug section (14) and a receptacle section (15),
wherein the receptacle section (15) features sidewalls (16) that at least partially encompass the plug section (14) of the following element laterally in the region of the conical tensioning surface (7) and the conical coupling surface (8),
wherein recesses (18) for accommodating pins (17) are provided between the two sidewalls (16) in the region of the receptacle section (15),
wherein pins (17) and said recesses (18) are provided for connecting the elements,
and wherein the pins of one element can be inserted into the recesses of the following element,
**characterized in that**
the recesses are realized in the form of elongated holes or curved elongated holes, **in**
**that** the pins (17) are arranged such that they extend approximately parallel to the central axis (10), and **in**
**that** the pins (17) and the recesses (18) are realized in such a way that the elements can be displaced relative to one another and the elements are able to rotate about the pins, but a displacement of one element relative to the following element is blocked in the radial direction.

2. The pipe connecting device according to claim 1, **characterized in that** the pins (17) are provided on the plug section (14), and **in that** the recesses (18) are provided on the inner side of the sidewalls (16) of the receptacle section (15).

3. The pipe connecting device according to claim 1 or 2, **characterized in that** the sidewalls (16) feature skirting elements (32) that at least partially overlap the following element (3) or the sidewalls (16) of the following element (3) laterally.

4. The pipe connecting device according to one of claims 1 to 3, **characterized in that** a sealing ring (11) is provided and contacts the clamping ring (4) over its entire circumference at least on the pipe side (12) and on the coupling side (13).

5. The pipe connecting device according to claim 4, **characterized in that** a dirt sealing lip (22) is provided and covers the gap between the tension ring (5) and the coupling ring (6) and/or the outwardly directed surface of the clamping ring (4), and **in that** this dirt sealing lip is preferably provided on the sealing ring (11).

6. The pipe connecting device according to claim 4 or 5, **characterized in that** a sealing groove (27) for accommodating the retaining extension (28) of the sealing ring (11) is provided on the clamping ring (4), wherein said sealing groove preferably is annularly recessed into the individual elements on the pipe side (12) of the clamping ring (4) over the entire circumference thereof.

7. The pipe connecting device according to one of claims 1 to 6, **characterized in that** gripping elements (21) are provided on the pipe side (12) of the clamping ring (4) and feature gripping teeth (29) at least on their side that faces the pipe, and **in that** the gripping teeth preferably have a harder surface than the clamped insertion end (1).

8. The pipe connecting device according to one of claims 1 to 7, **characterized in that** the tension ring can be tensioned against the coupling ring (6) by means of the tensioning element (20), wherein the tensioning force acts at least partially in the direction of the insertion end (1) via the conical tensioning surface (7), the conical coupling surface (8) and the clamping ring (4).

9. The pipe connecting device according to one of claims 1 to 8, **characterized in that** the tension ring can be tensioned against the coupling ring (6) by means of a screw element (19), wherein the tensioning force acts at least partially in the direction of the insertion end (1) via the conical tensioning surface (7), the conical coupling surface (8) and the clamping ring (4).

10. The pipe connecting device according to one of claims 1 to 9, **characterized in that** the extraction force acts in the direction of the insertion end (1) via the conical tensioning surface (7) and the angle α of the sections of the clamping ring (4) that face the conical tensioning surface.

11. The pipe connecting device according to one of claims 1 to 10, **characterized in that** spring elements (34) are provided on the face sides of the plug sections (33) and in the unstressed state space apart the elements to the extent permitted by kinematics.

## Revendications

1. Dispositif de raccordement de tuyauterie pour un raccordement anti-extraction et étanche d'un embout mâle (1) avec un manchon (2), comprenant une bague de serrage (4) composée d'une pluralité de membres (3) disposés de façon mobile entre eux dans le sens périphérique, qui présente un périmètre variable et peut être tendue contre une bague de manchon (6) avec un collier tendeur (5),
sachant que le collier tendeur (5) présente une face conique de tension (7) et la bague de manchon (6) présente une face conique de manchon (8),
sachant que les deux faces coniques (7, 8) sont orientées en direction de la bague de serrage et de l'axe médian (10),
sachant que la largeur (9) de la bague de serrage (4) diminue avec un écart croissant depuis l'axe médian (10),
sachant que les membres (3) présentent respectivement un tronçon d'enfichage (14) et un tronçon de réception (15),
sachant que le tronçon de réception (15) présente des joues latérales (16) qui entourent au moins partiellement le tronçon d'enfichage (14) du membre suivant latéralement au niveau de la face conique de tension (7) et de la face conique de manchon (8),
sachant que des évidements (18) sont prévus pour recevoir des ergots (17) au niveau du tronçon de réception (15) entre les deux joues latérales (16),
sachant que des ergots (17) et lesdits évidements (18) sont prévus pour relier les membres,
et sachant que les ergots de l'un membre peuvent être introduits dans les évidements du membre suivant,
**caractérisé en ce que**
les évidements sont oblongs ou oblongs et coudés, que les ergots (17) sont disposés environ parallèlement à l'axe médian (10)
et que les ergots (17) et les évidements (18) sont ainsi formés qu'un déplacement des membres entre eux et une rotation des membres autour des ergots est rendu possible, sachant qu'un déplacement de l'un membre par rapport au membre suivant est bloqué dans le sens radial.

2. Dispositif de raccordement de tuyauterie selon la revendication 1, **caractérisé en ce que** les ergots (17) sont prévus sur le tronçon d'enfichage (14) et que les évidements (18) sont prévus sur la face intérieure des joues latérales (16) du tronçon de réception (15).

3. Dispositif de raccordement de tuyauterie selon la revendication 1 ou 2, **caractérisé en ce que** les joues latérales (16) présentent des éléments de tablier (32) qui chevauchent au moins partiellement latéralement un membre suivant (3) ou les joues latérales (16) du membre suivant (3).

4. Dispositif de raccordement de tuyauterie selon l'une des revendications 1 à 3, **caractérisé en ce qu'**une bague d'étanchéité (11) est prévue qui touche la bague de serrage (4) au moins sur le côté tuyauterie (12) et sur le côté manchon (13), sur son périmètre entier.

5. Dispositif de raccordement de tuyauterie selon la revendication 4, **caractérisé en ce qu'**une lèvre d'étanchéité contre les salissures (22) est prévue, laquelle recouvre la fente entre le collier tendeur (5) et la bague de manchon (6) et/ou la face orientée vers l'extérieur de la bague de serrage (4) et que celle-ci est prévue de préférence sur la bague d'étanchéité (11).

6. Dispositif de raccordement de tuyauterie selon l'une des revendications 4 ou 5, **caractérisé en ce qu'**une rainure d'étanchéité (27) pour recevoir le prolongement de fixation (28) de la bague d'étanchéité (11) est prévue sur la bague de serrage (4), laquelle est de préférence évidée de façon annulaire sur le côté tuyauterie (12) de la bague de serrage (4) sur tout son périmètre dans les membres individuels.

7. Dispositif de raccordement de tuyauterie selon l'une des revendications 1 à 6, **caractérisé en ce que** des éléments anti-dérapants (21) sont prévus sur le côté tuyauterie (12) de la bague de serrage (4), lesquels présentent des dents anti-dérapantes (29) au moins sur leur côté tourné vers la tuyauterie et que les dents anti-dérapantes présentent de préférence une surface plus dure que l'embout mâle (1) serré.

8. Dispositif de raccordement de tuyauterie selon l'une des revendications 1 à 7, **caractérisé en ce que** le collier tenseur peut être tendu contre la bague de manchon (6) avec l'élément tenseur (20), sachant que la force de tension est dirigée au moins partiellement par la face conique de tension (7), la face conique de manchon (8) et la bague de serrage (4) en direction de l'embout mâle (1).

9. Dispositif de raccordement de tuyauterie selon l'une des revendications 1 à 8, **caractérisé en ce que** le collier tenseur peut être tendu contre la bague de manchon (6) avec un élément de vis (19), sachant que la force de tension est dirigée au moins partiellement par la face conique de tension (7), la face conique de manchon (8) et la bague de serrage (4) en direction de l'embout mâle (1).

10. Dispositif de raccordement de tuyauterie selon l'une des revendications 1 à 9, **caractérisé en ce que** la force de traction est dirigée par la face conique de tension (7) et de l'angle α des tronçons de la bague de serrage (4) tournés vers la face conique de tension en direction de l'embout mâle (1).

11. Dispositif de raccordement de tuyauterie selon l'une des revendications 1 à 10, **caractérisé en ce que** des éléments de ressort (34) sont prévus sur les faces avant des tronçons d'enfichage (33), lesquels éloignent l'un de l'autre les membres dans l'état non contraint, dans les limites du trajet permis par la cinématique.
